# EUROPEAN PATENT APPLICATION

(11) **EP 3 564 113 A1**
(43) Date of publication of application: **06.11.2019**
(21) Application number: 16925322.6
(22) Date of filing: 29.12.2016
(51) Int. Cl.: B62M 11/10, F16H 15/16, B62M 11/14

(54) **MULTI-STAGE TRANSMISSION BICYCLE**

(71) Applicant: Ha, Tae Hwan, Seoul 01776 (KR)
(72) Inventor: Ha, Tae Hwan, Seoul 01776 (KR)
(74) Representative: Murgitroyd & Company
(86) International application number: PCT/KR2016/015524
(87) International publication number: WO 2018/124341

(57) **Abstract**

A multi-stage transmission bicycle, comprises: a bicycle body having a front wheel and a rear wheel which are rotatably fixed to a frame, pedals which are fixed to the frame and rotate; a transmission plate which rotates with the pedals and has a plurality of transmission gear teeth formed concentrically on the surface and driving gear teeth on the outer peripheral side; a transmission unit having an input shaft, which is coupled to the driving teeth and is for receiving transmission of the rotational force, a ring gear, which rotates by means of the input shaft, an output shaft, which is disposed inside the ring gear, has a sun gear, and is coupled to the rear wheel, pinion gears, which are coupled to the sun gear and inner gear teeth of the ring gear, a carrier, which couples the pinion gears, and a driving gear which is gear coupled to the carrier, and a driving gear which is gear coupled to the carrier; and a number-of-revolutions changing module for changing the rotational direction of the driving gear and the number of revolutions of the driving gear.

## Description

### [Technical Field]

The teachings in accordance with exemplary and non-limiting embodiments of this invention relate generally to a multi-stage transmission bicycle, and more particularly to a multi-stage transmission bicycle configured to run a bicycle by driving a rear wheel of the bicycle without a plurality of sprocket wheels respectively formed on a pedal and a rear wheel and without a chain coupled to the plurality of sprocket wheels, whereby a speed control can be made by multi-stage transmission during the run of the bicyle.

### [Background Art]

A bicycle is a convenient transportation means widely used in our daily life.

In general, a bicycle may include a frame forming a body of the bicycle and formed with a handle, a front wheel rotatably fixed to a front side of the frame, a rear wheel rotatably fixed to a rear side of the frame, a pedal disposed between the front wheel and the rear wheel, a sprocket wheel coupled to the pedal and the rear wheel and a chain coupled to the sprocket wheel.

A bicycle can be run by allowing rotating a pedal and transmitting a power to the rear wheel through the sprocket wheel and the chain.

Furthermore, a bicycle may be mounted with a transmission using a sprocket wheel having a mutually different size to allow the bicycle to run with a less power on an uphill or a flat land.

However, when a bicycle is run using a sprocket wheel and the chain, the bicycle suffers from disadvantages in that a chain is quite often disengaged from the sprocket wheel to cause inconveniences, and transmission shock is serious when a transmission is used using the sprocket wheels each having a different size.

### [Detailed Description of the Invention]

### [Technical Subject]

The present invention is to provide a multi-stage transmission bicycle configured to allow the bicycle to run without sprocket wheels and chain for the running of the bicycle and capable of transmission without recouse to using the sprocket wheels and chain.

### [Technical Solution]

In one generat aspect of the present invention, there is provided a multi-stage transmission bicycle, comprising:
a bicycle body having a front wheel and a rear wheel which are rotatably fixed to a frame, pedals which are fixed to the frame and rotate;
a transmission plate which rotates with the pedals and has a plurality of transmission gear teeth formed concentrically on the surface and driving gear teeth on the outer peripheral side;
a transmission unit having an input shaft, which is coupled to the driving teeth and is for receiving transmission of the rotational force, a ring gear, which rotates by means of the input shaft, an output shaft, which is disposed inside the ring gear, has a sun gear, and is coupled to the rear wheel, pinion gears, which are coupled to the sun gear and inner gear teeth of the ring gear, a carrier, which couples the pinion gears, and a driving gear which is gear coupled to the carrier, and a driving gear which is gear coupled to the carrier; and
a number-of-revolutions changing module for changing the rotational direction of the driving gear and the number of revolutions of the driving gear.

Preferably, but not necessarily, the transmission gear teeth may be formed with mutually different diameter.

Preferably, but not necessarily, one lateral end of input shaft may be formed with a screw gear coupled with the driving teeth, and the other lateral end of the input shaft facing the said one lateral end of the input shaft may be formed with a plain gear coupled with outside teeth of the ring gear.

Preferably, but not necessarily, the output shaft and the rear wheel may be coupled with a bevel gear to allow the rear wheel to drive by rotation of the output shaft.

Preferably, but not necessarily, the number-of-revolutions changing module may include a driving gear shaft gear coupled at one lateral end to the driving gear, transmission gears formed at the driving gear shaft in a plural number and coupled to any one of the transmission gear teeth, and a position change unit for gear-coupling any one of the transmission gears to the transmission teeth by moving the driving gear shaft.

Preferably, but not necessarily, at least two driving gear shafts may be coupled to allow rotating to a circumferential direction and elongating to a lengthwise direction, and the position changing unit may include a wire unit pulling or pushing any one of the two driving gear shafts using a wire, and a manipulation part coupled to a handle of the frame in order to drive the wire unit.

Preferably, but not necessarily, the wire unit may include an elastic member providing a restoring force to the wire.

Preferably, but not necessarily, the driving gear shaft may be formed with a length crossing a transmission plate.

Preferably, but not necessarily, the transmission gear teeth may include a low speed transmission gear teeth adjacently disposed with the pedal and a high speed transmission gear teeth disposed at an outside of the low speed transmission gear teeth.

Preferably, but not necessarily, the number-of-revolutions changing module may include a motor applying a rotational force to the driving gear, and a manipulation part formed at the handle of the frame in order to control the revolution of the motor.

### [Advantageous Effects]

The multi-stage transmission bicycle according to the present invention provides a multi-stage transmission bicycle capable of running without using sprocket wheels and chain for running the bicycle, and capable of transmission when a bicycle is running without using the sprocket wheels and chain.

### [Brief Description of Drawings]

FIG. 1 is a perspective view illustrating an external look of a multi-stage transmission bicycle according to an exemplary embodiment of the present invention.
FIG. 2 is a cross-sectional view illustrating an interior of a case of a multi-stage transmission bicycle of FIG. 1.
FIG. 3 is a perspective view illustrating an external look of a transmission plate illustrated in FIG. 2.
FIG. 4 is an enlarged view of 'A' portion of FIG. 2.
FIG. 5 is a perspective view illustrating a carrier and pinion gears of FIG. 2.
FIGS. 6 to 9 are plain views illustrating a relationshop between transmission plate and transmission gear teeth in order to explain the speed change of a bicycle by a number-of-revolutions changing module.

### [BEST MODE]

It should be appreciated that hereinafter-explained present invention may be implemented in numerous ways, one or more particular exemplary embodiments of which are shown in the figures, and described in detail in the Detailed Description.

It is to be understood that the terminology used herein is for the purpose of describing particular examplary embodiments only and is not intended to be limiting, and various modifications, additions and substitutions are possible, without departing from the scope and spirit of the invention.

Accordingly, in some embodiments, well-known processes, well-known device structures and well-known techniques are not illustrated in detail to avoid unclear interpretation of the present disclosure.

In the specification, a singular form of terms includes plural forms thereof, unless specifically mentioned otherwise. In the term "comprises", "includes", "comprising" and/or "including" as used herein, the mentioned component, step, operation and/or device is not excluded from presence or addition of one or more other components, steps, operations and/or devices.

Furthermore, although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section.

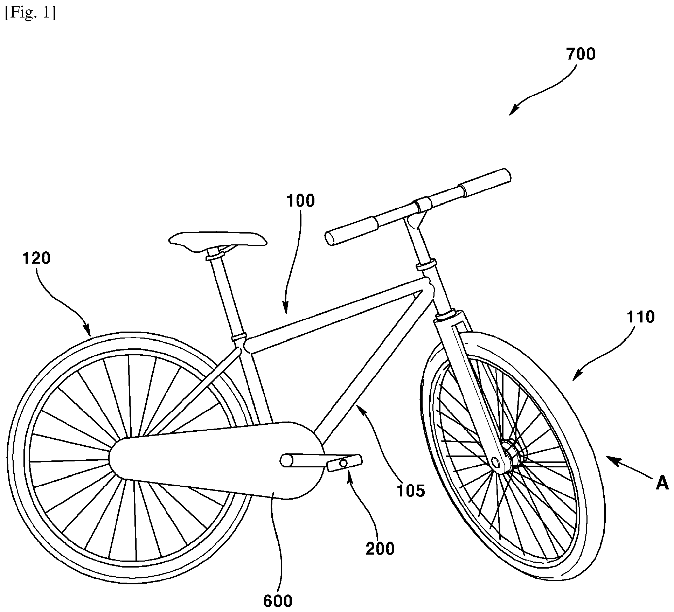

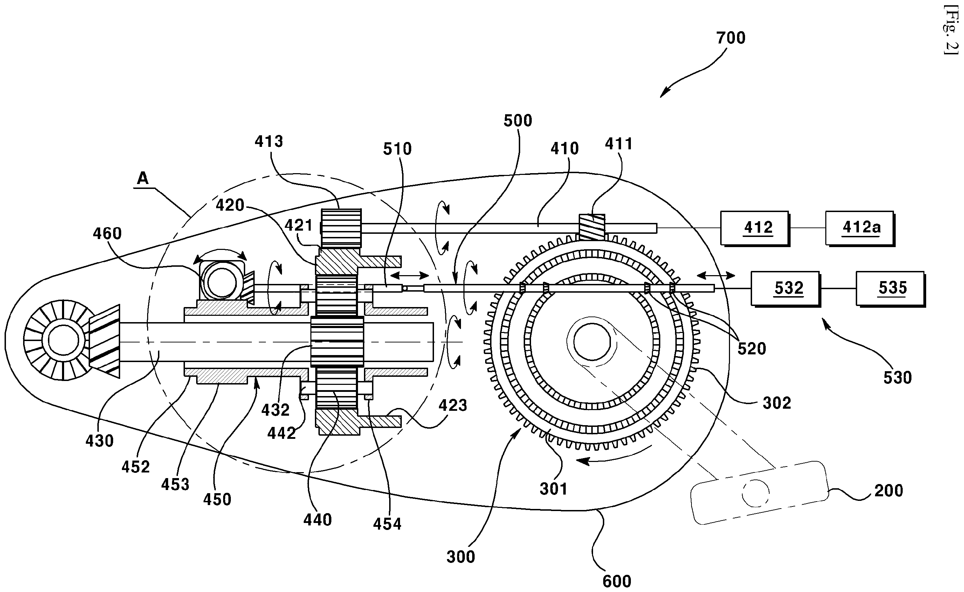

FIG. 1 is a perspective view illustrating an external look of a multi-stage transmission bicycle according to an exemplary embodiment of the present invention, and FIG. 2 is a cross-sectional view illustrating an interior of a case of a multi-stage transmission bicycle of FIG. 1.

Referring to FIGS. 1 and 2, a multi-stage transmission bicycle (700) may include a bicycle body (100), a pedal (200). a transmission plate (300), a transmission unit (400) and a number-of-revolutions changing module (500). In addition, the multi-stage transmission bicycle (700) may further comprise a case (600) encompassing the transmission plate (300), the transmissison unit (400) and the number-of-revolutions changing module (500).

The bicycle body (100) may include a frame (105), a front wheel (110) and a rear wheel (120).

A front side of the frame (105) may be rotatably coupled with a front wheel (110) relative to the frame (105), and a rear side of frame (105) may be rotatably coupled with a rear wheel (120) relative to the frame (105).

The pedal (200) may be coupled to the frame (105), and the pedal (200) may be interposed between the front wheel (110) and the rear wheel (120).

The pedal (200) may be rotatably coupled to the frame (105), and a rotational force may be generated from the pedal (200) when a user rotates the pedal (200).

In the exemplary embodiment of the present invention, the rotational force applied to the pedal (200) is a power source to allow the bicycle body (100) to run without chain and sprocket wheels.

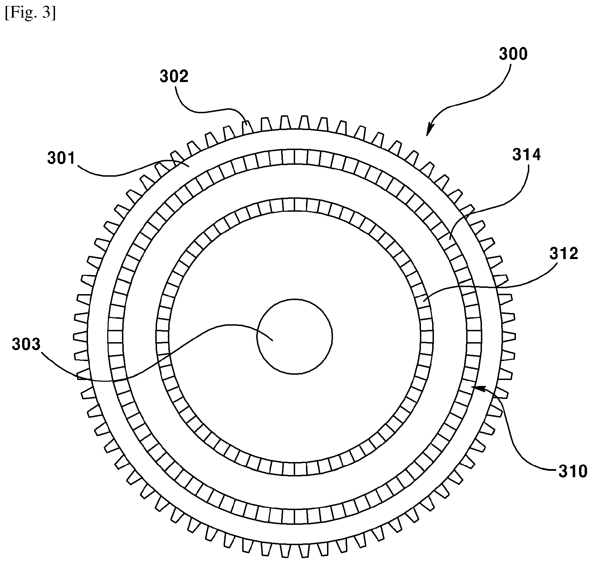

FIG. 3 is a perspective view illustrating an external look of a transmission plate illustrated in FIG. 2.

Referring to FIGS. 2 and 3, the transmission plate (300) may be coupled to the pedal (200), and the transmission plate (300) may be rotated with the same number of rotations along with the pedal (200).

The transmission plate (300) may be formed with a disc shape, for example. The disc-shaped transmission plate (300) may include a pair of surfaces (301) and an outer peripheral surface (302).

A center of the surface (301) of the transmission plate (300) may be formed with a through hole (303) to be coupled by the pedal (200), and the surface (301) of the transmission plate (300) may be formed with transmission (gear) teeth (310).

In the exemplary embodiment of the present invention, the transmission gear teeth (310) may be concentrically formed in a plural number about the through hole (303), and each of the transmission teeth (310) may be formed with a mutually different diameter when viewed from the surface (301).

The transmission gear teeth (310) may include low speed transmission teeth (312) and high speed transmission teeth (314), for example.

The low speed transmission teeth (312) may be used for low speed running from a stationary state, and the high speed transmission teeth (314) may be used to run a bicycle at a high speed.

In the exemplary embodiment of the present invention, the low speed transmission teeth (312) may be adjacently disposed with the through hole (303) in the transmission plate (300), and the high speed transmission teeth (314) may be disposed outside of the low speed transmission teeth (312) about the through hole (303).

Although the exemplary embodiment of the present invention has explained and illustrated that the transmission plate (300) is disposed with the low speed transmission teeth (312) and the high speed transmission teeth (314), the transmission plate (300) may be formed with at least three transmission teeth (314).

In the exemplary embodiment of the present invention, a width of the low speed transmission teeth (312) and a width of the high speed transmission teeth (314) may be mutually differently formed in order to be gear-coupled with transmission gear (discussed later).

Meantime, an outer peripheral surface of the disc-shaped transmission plate (300) may be formed with driving teeth (320). The driving teeth (320) formed on the outer peripheral surface of the transmission plate (300) may provide the rotation force of the transmission plate (300) to a ring gear of the transmission unit (400, discussed later) to allow the ring gear to be rotated by the rotational force provided from the transmission plate (300).

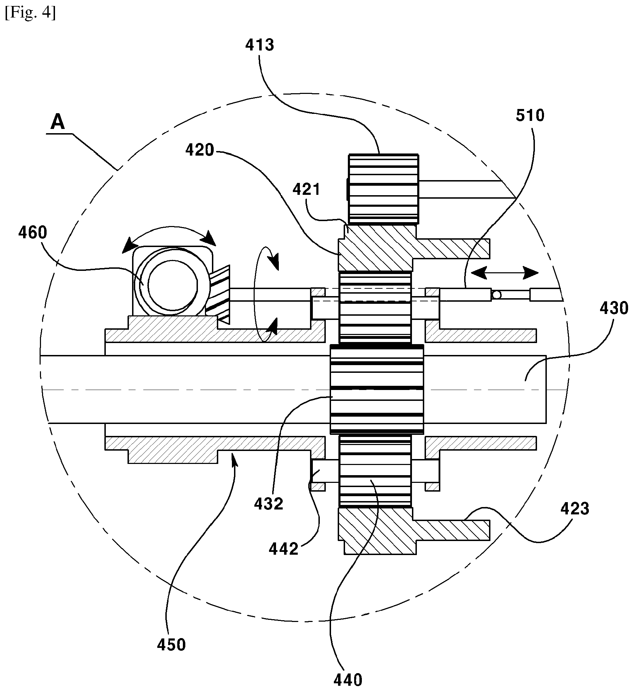

FIG. 4 is an enlarged view of'A' portion of FIG. 2.

Referring to FIGS. 2 and 4, the transmission unit (400) may include an input shaft (410), a ring gear (420), an output shaft (430), a pinion gear (440), a carrier (450) and a driving gear (460). In addition, the input shaft (410) may be coupled by a rotating unit (412) such as a motor, and the rotating unit (412) may be electrically connected by a battery (412a) for driving the rotating unit (412).

The input shaft (410) may provide a rotating force provided to the transmission plate (300) by the pedal (200) to the ring gear (420).

A distal end of the input shaft (410) may be gear-coupled with the driving teeth (320) formed at an outer peripheral surface of the transmission plate (300) by the screw gear (411).

Concomittant with rotation of the transmission plate (300) by rotation of pedal (200), the input shaft (410) may be also rotated by the screw gear (411) gear-coupled with the driving teeth (320).

The other distal end facing the said one distal end of the input shaft (410) formed with the screw gear (411) may be formed with a plain gear (413), and the plain gear (413) may be rotated along with the input shaft (410).

The ring gear (420) in the exemplary embodiment of the present invention may be formed with a narrow-widthed cylindrical shape, and an outside of the ring gear (4200 may be formed with outside teeth (421) and an inside of the ring gear (420) may be formed with inside teeth (423).

The outside teeth (421) formed at an outside of the ring gear (420) may be gear-coupled with a plain gear 413) formed at the other lateral end of the input shaft (410), and the ring gear (420) gear-coupled with the plain gear (413) may be applied with a rotational force, whereby the ring gear (420) is rotated.

The output shaft (430) may be disposed at an inside of the ring gear (420) and a portion of the output shaft (430) may be disposed at an inside of the ring gear (420) and a portion of the output shaft (420) may be disposed at an outside of the ring gera (420).

The output shaft (430) may be disposed at a rotating center of the ring gear (420), and a portion disposed inside of the ring gear (420) in the output shaft (430) may be formed with a sun gear part (432). The sun gear part (432) may be formed along an outer peripheral surface of the output shaft (430).

A distal end of the output shaft (430) may be coupled by a bevel gear and the like, and the rotational force outputted from the output shaft (430) may be provided to the rear wheel (120).

Although the exemplary embodiment of the present invention has illustrated and explained that the rotational force outputted from the output shaft (430) is applied to the rear wheel (120), it should be apparent that the rotational force outputted from the output shaft (430) may be alternatively provided to the front wheel (110) or provided to both the front wheel (110) and the rear wheel (120).

The pinion gear (440) may be disposed at an inside of the ring gear (420), and the pinion gear (440) may be disposed at an inside of the ring gear (420) in a plural number.

The pinion gear (440) in the exemplary embodiment of the present invention may be disposed at an inside of the ring gear (420) in the number of three (3) or in the number of four (4).

A center of each pinion gear (440) may be formed with a through hole, and the through hole that penetrates the pinion gear (440) may be coupled by a pinion gear shaft (442).

In the exemplary embodiment of the present invention, four (4) pinion gears (440) may be disposed at an inside of the ring gear (420).

The teeth formed on the outer peripheral surface of each pinion gear (440) may be respectively gear-coupled with inside teeth (423) disposed at an inside of the ring gear (420) and the sun gear part (423) formed at the output shaft (430).

The pinion gears (440) may rotate while being fixed at an inside of the ring gear (420) by a carrier (described later) and may revolve relative to the output shaft (430) inside the ring gear (420) based on the output shaft (430).

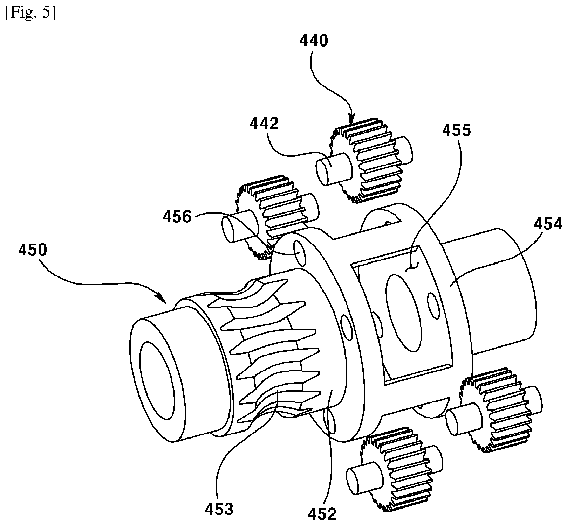

FIG. 5 is a perspective view illustrating a carrier and pinion gears of FIG. 2.

Referring to FIGS. 2 and 5, the carrier (450) may rotatably and revolutionally fix the pinion gears (440) inside of the ring gear (420).

The carrier (450) may include a first carrier body part (452) and a second carrier body part (454).

The first carrier body part (452) may take a cylindrical shape, and the first carrier body part (452) may be inserted thereinto by an output shaft (430).

A portion of the first carrier body part (452) may be disposed inside of the ring gear (420), and a portion of the first carrier body part (452) may be disposed outside of the ring gear (450).

The first carrier body part (452) disposed outside of the ring gear (420) may be formed with (gear) teeth (453).

The second carrier body part (454) may be formed by allowing a portion of the first carrier body part (452) to be enlarged, and the second carrier body part (454) may be formed at an area corresponding to that of the sun gear part (432) formed on the output shaft (430).

The second carrier body part (454) formed by being extended from the first carrier body part (452) may be formed with first openings (455), and the first openings (455) may be formed at an area corresponding to that of the pinion gears (440).

Each of the second carrier body parts (454) may be formed with a hole (456) coupled by a pinion gear shaft (442) coupled to a rotating center of pinion gear (440).

A portion of teeth of the pinion gear (440) may be exposed from the first openings (455) of the second carrier body part (454) while the hole (456) is coupled by the pinion gear (440), and the teeth of the pinion gear (440) may be respectively gear-coupled with the sun gear part (432) formed on the output shaft (430) and the inside teeth (423) of ring gear (420).

The driving gear (460) may stop or rotate the carrier (450), and the driving gear (460) may rotate the carrier (450) to a first direction which is the same direction as the rotational direction of the output shaft (430) or to a second direction which is an opposite direction from the rotational direction of output shafrt (430).

The driving gear (460) may be vertically coupled to the second carrier body part (454), for example. The driving gear (460) may be used by a screw gear, a plain gear and the like and may be additionally used by any various worm gears that can change the rotational direction and the number of rotations.

In the exemplary embodiment of the present invention, concomitant with rotation of ring gear (420) by the rotational force applied to the input shaft (410), the pinion gear (440) gear-coupled to the ring gear (420) and the output shaft (430) may be rotated while being fixed to the carrier (450).

When the carrier (450) is fixed by the driving gear (460) to allow the pinion gear (440) to only rotate without revolution, the output shaft (430) may be rotated at a very fast speed.

Meanwhile, when the driving gear (460) is rotated to allow the carrier (450) to be rotated to the first direction which is the same direction as that of the output shaft (430), the pinion gear (440) may resolve about the output shaft (430) and the number of rotations at the output shaft (430) may be rotated at the lower number of rotations than that of the ring gear (420).

That is, in the exemplary embodiment of the present invention, the number of rotations or rotational force outputted to the output shaft (430) can be adjusted by adjusting the number of rotations and rotational direction of the carrier (450) using the driving gear (460).

To sum up, when the number of rotations at the ring gear is same and the driving gear (460) does not rotate the carrier (450), the output shaft (430) may be rotated at a first number of rotations.

Meantime, when the number of rotations at the ring gear is same, and when the driving gear (460) rotates the carrier (450) to the first direction which is the same direction as that of the output shaft, the output shaft (430) may be rotated at a second number of rotations which is lower than the first number of rotations.

Meantime, when the number of rotations at the ring gear is same and when the ring gear (460) rotates the carrier (450) to the second direction which is an opposite direction from that of the output shaft, the output shaft (430) may be rotated at a second number of rotations higher than the first number of rotations.

The number-of-revolutions changing module (500) may function to adjust or change the number of rotations at the ring gear (460).

The number-of-revolutions changing module (500) in the exemplary embodiment of the present invention may include a driving gear shaft (510), a transmission gear (520) and a position change unit (530).

The driving gear shaft (510) may function to mutually connect the transmission plate (300) and the driving gear (460).

In the exemplary embodiment of the present invention, a distal end of the driving gear shaft (510) may be mutually connected to the teeth of the driving gear (460) using screw gear and the like, and the other distal end of the driving gear shaft (510) may be formed with a length that passes through the transmission plate (300).

The other distal end facing the said one distal end of the driving gear shaft (510) in the exemplary embodiment of the present invention may be directly coupled to teeth (453) formed on the first carrier body part (452) of carrier (450) using the driving gear (460) or using screw gear or plain gear without recourse to the driving gear (460).

The driving gear shaft (510) in the exemplary embodiment of the present invention may be divided to two pieces, and the two-pieced driving gear shaft (510) may be elongaged or reduced in length while being rotaed.

It is preferable that the length of the driving gear shaft (510) be made to be elongated or reduced using a key or a key home while being rotated. For example, one side of the two-pieced driving gear shaft (510) may be formed with a long-lengthed key home, and the other side of the driving gear shaft (510) may be formed with a long-lengthed key inserted into the key home to allow the driving gear shaft (510) to be lengthened or shortened in length while being rotated.

The transmission gear (520) may be formed in a plural number on the driving gear shaft (510), and the transmission gear (520) may be formed on the driving gear shaft (510) in a tooth shape, and the transmissison gear (520) may be integrally formed with the driving gear shaft (510).

The transmission gear (520) formed on the driving gear shaft (510) crossing the transmission plate (300) may be respectively disposed on both sides of a through hole (303) based on the through hole (303) of the transmission plate (300). This is to rotate the driving gear (460) to the first direction or to the second direction which is an opposite direction from the first direction to change the rotating force outputted to the output shaft (430) or the number of rotations.

That is, when the transmission gears (520) are respectively disposed on both sides of the through hole (303) based on the through hole (303), a low speed mode may be possible in which the driving gear (460) is rotated to the first direction which is the same direction as the rotation direction of the output shaft (430), or a high speed mode may be possible in which the driving gear (460) is rotated to the second direction which is an opposite direction from the rotation direction of the output shaft (430).

Hereinafter, for convenience sake, the transmission gear (520) is defined as a first transmission gear (522), a second transmission gear (524), a third transmission gear (526) and a fourth transmission gear (528).

The position changing unit (530) may include a wire unit (532) and a manipulation part (535).

The wire unit (532) of position changing unit (530) may pull or push any one of the driving gear shafts (510) using a wire to allow any one of the plurality of transmissison gears (520) formed on the driving gear shaft (510) to be coupled to any one of the transmission teeth (310) formed on the transmission plate (300).

The manipulation part (535) may be mounted on a handle formed on a frame, and apply a tension to the wire unit (532) to adjust the position of the transmission gears (520) formed on the driving gear shaft (510).

In the exemplary embodiment of the present invention, the wire unit (532) may be disposed with an elastic member such as a spring configured to restore the wire applied with tension to a designated position in response to a user's selection.

Hereinafter, the speed change of bicycle by the number-of-revolutions changing module will be described with reference to the accompanying drawings 6 to 9.

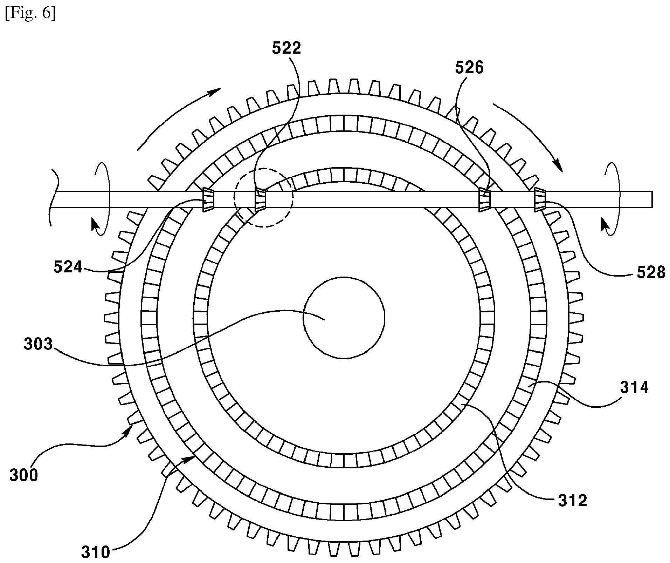

FIGS. 6 to 9 are plain views illustrating a relationshop between transmission plate and transmission gear teeth in order to explain the speed change of a bicycle by a number-of-revolutions changing module.

Referring to FIG. 6, the first transmission gear (522) may be gear-coupled with the low speed transmission teeth (312) disposed at an inside of the transmission teeth (310) by the rotation of the pedal (200) when the transmissison plate (300) is rotated, and the remaining second to fourth transmission gears (524,526,528) may not be gear-coupled with the transmission teeth (310).

According to FIG. 6, conmittant with the first transmission gear (522) being coupled to the low speed transmission teeth (312), the first transmission gear (522) and the driving gear shaft (510) may be rotated at a high speed, whereby the driving gear (460) may be rotated to the first direction which is the same rotation direction as that of the output shaft (430), and as a result, a user can start a stopped bicycle with a little force (frist gear transmission).

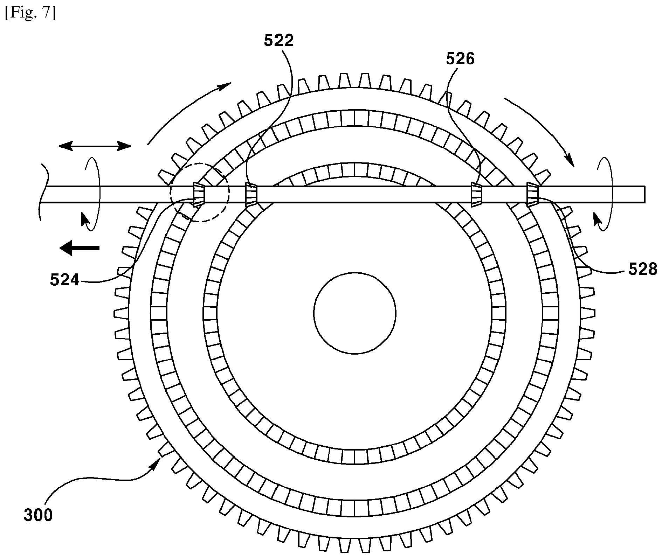

Referring to FIG. 7, when a user manipulates the manipulation part (535) in order to increase the speed of a bicycle after the first gear transmission, a wire unit (532) is activated to allow the driving gear shaft (510) to rotate and move, whereby the second transmission gear (524) is moved to be gear-coupled to the high transmissison teeth (314), and the remaining first transmission gear (522), the third transmissison gear and the fourth transmission gear (526,528) may not be gear-coupled with the transmissison teeth (310).

According to FIG. 7, concomitant with the high speed transmission teeth (312) being coupled by the second transmission gear (524), the second transmission gear (524) and the driving gear shaft (510) may also be rotated at the number of rotations lower than in FIG. 6, and therefore, with reduction in the number of rotations of the driving gear (460), the output shaft (430) may be rotated at a faster number of rotations whereby the bicycle can be moved to the first speed (second gear transmission).

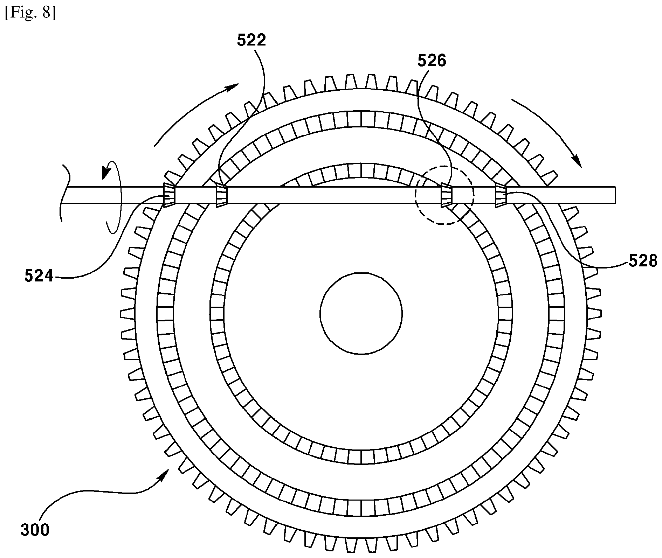

Referring to FIG. 8, when a user manipulates the manipulation part (535) in order to further increase the speed with a less force after moving to the bicycle to the first speed, the third transmission gear 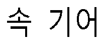 (526) may be gear-coupled with the low speed transmission teeth (312) disposed at an inside of the transmission teeth (310), and the remaining first and second transmissions gear and the fourth transmission gear 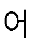 (522,524,528) may not be gear-coupled to the transmissison teeth (310). The third transmission gear (526) may be disposed at an opposite side of the first and second transmission gears (522, 524) based on the through hole (303) of the transmissison plate (300).

According to FIG. 8, conmittant with the low speed transmission teeth (312) being coupled by the third transmissison gear (526), the third transmission gear (526) may be rotated at a high speed to a direction opposite to the rotating direction of the driving gear shaft (510) of FIGS. 6 and 7, whereby the driving gear (510) may be also rotated to a direction opposite to the rotating direction of the driving gear shaft (510) of FIGS. 6 and 7 to rotate the driving gear (460) to the second direction which is an opposite direction from the rotating direction of the output shaft (430), whereby a user may move the bicycle wth a little force at a second speed which is faster than the first speed (third gear transmission).

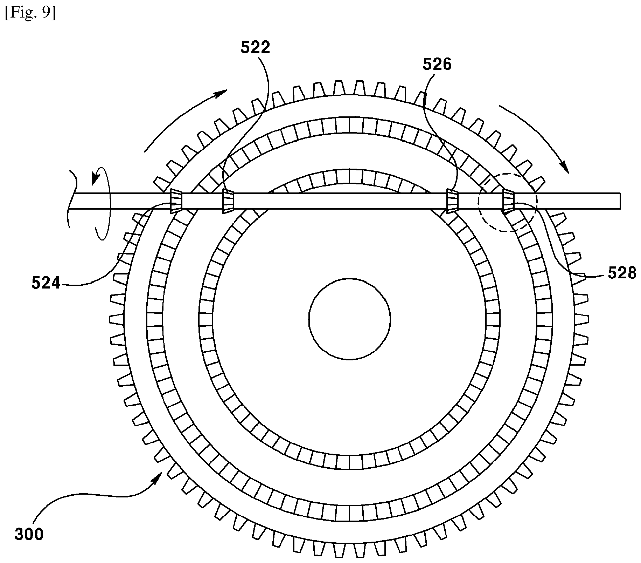

Referring to FIG. 9, as a user manipulates the manipulation part (535) in order to obtain a highest speed with a little force while moving the bicycle at a second speed, the wire unit (532) is operated to allow the driving gear shaft (510) to be rotated, whereby the fourth transmission gear (528) may be gear-coupled with the high speed transmission teeth (314), and the remaining first to third transmission teeth (522,524,526) are not gear-coupleed with the transmission (310).

The fourth transmission gear (528) may be disposed at an opposite side of the first and second transmission gears (522, 524) based on the through hole (303) of the transmission plate (300) to be adjacently disposed with the third transmission gear (526).

Referring to FIG. 9, concomitant with the high speed transmission gear (312) being coupled by the fourth transmission gear (528), the fourth transmission gear (528) may be rotated at a speed lower than that of FIG. 8, whereby the driving gear shaft (510) may be also rotated at a speed lower than that of FIG. 8, and the driving gear (460) may be rotated to the second direction which is an opposite direction from the output shaft (430) at a low speed, and as a result, the bicyle can be moved to a third speed which is the top speed (fourth gear transmission).

Although the exemplary embodiment of the present invention has explained a technology that is shifted at a fourth gear transmission, transmission more than fourth gear transmission can be implemented by changing the number of transmission teeth (310) and the size of transmission teeth (310) formed on the transmission plate (300).

Conversely, in order to reduce the speed or climb up a hill, a user may adjust the manipulation part (535) may gear-couple the position of the first to fourth transmission gears (522,524,526,528) to any one tooth of the transmission teeth (310) to reduce the speed of the bicycle and to increase the torque, whereby the user can move the bicycle up the hill with a little force.

Although the number-of-revolutions changing module according to the exemplary embodiment of the present invention has changed the revolutions and the rotation direction of driving gear using the driving gear shaft, transmission gear and position change unit, the number-of-revolutions changing module may alternatively include a manipulation part formed on a handle of the frame in order to control the motor directly applying a rotational force to the driving gear and the number of revolutions of the motor.

As discussed above, the multi-stage transmission bicycle according to the present invention has an advantageous effect in that a bicycle can be run without sprocket wheels and chain for running the bicycle, and a multi-stage transmission is possible when the bicycle is running without using the sprocket wheels and chain.

Meantime, the foregoing explanations are intended only to be illustrative of the technical ideas of the present invention, and therefore, it should be appreciated by the skilled in the art that the invention is not limited in its application to any particular exemplary embodiments, and various modifications, additions and substitutions are possible, without departing from the scope and spirit of the invention as disclosed in the accompanying claims.

### [Industrial Applicability]

The present invention may be used for a bicycle mounted with a multi-stage transmission.

## Claims

1. A multi-stage transmission bicycle, comprising:
a bicycle body having a front wheel and a rear wheel which are rotatably fixed to a frame, pedals which are fixed to the frame and rotate;
a transmission plate which rotates with the pedals and has a plurality of transmission gear teeth formed concentrically on the surface and driving gear teeth on the outer peripheral side;
a transmission unit having an input shaft, which is coupled to the driving teeth and is for receiving transmission of the rotational force, a ring gear, which rotates by means of the input shaft, an output shaft, which is disposed inside the ring gear, has a sun gear, and is coupled to the rear wheel, pinion gears, which are coupled to the sun gear and inner gear teeth of the ring gear, a carrier, which couples the pinion gears, and a driving gear which is gear coupled to the carrier, and a driving gear which is gear coupled to the carrier; and
a number-of-revolutions changing module for changing the rotational direction of the driving gear and the number of revolutions of the driving gear.

2. The multi-stage transmission bicycle of claim 1, wherein the transmission gear teeth are formed with mutually different diameter.

3. The multi-stage transmission bicycle of claim 1, wherein one lateral end of input shaft is formed with a screw gear coupled with the driving teeth, and the other lateral end of the input shaft facing the said one lateral end of the input shaft is formed with a plain gear coupled with outside teeth of the ring gear.

4. The multi-stage transmission bicycle of claim 1, wherein the output shaft and the rear wheel are coupled with a bevel gear to allow the rear wheel to drive by rotation of the output shaft.

5. The multi-stage transmission bicycle of claim 1, wherein the number-of-revolutions changing module includes a driving gear shaft gear coupled at one lateral end to the driving gear, transmission gears formed at the driving gear shaft in a plural number and coupled to any one of the transmission gear teeth, and a position change unit for gear-coupling any one of the transmission gears to the transmission teeth by moving the driving gear shaft.

6. The multi-stage transmission bicycle of claim 5, wherein at least two driving gear shafts are coupled to allow rotating to a circumferential direction and elongating to a lengthwise direction, and the position changing unit includes a wire unit pulling or pushing any one of the two driving gear shafts using a wire, and a manipulation part coupled to a handle of the frame in order to drive the wire unit.

7. The multi-stage transmission bicycle of claim 6, wherein the wire unit includes an elastic member providing a restoring force to the wire.

8. The multi-stage transmission bicycle of claim 5, wherein the driving gear shaft is formed with a length crossing a transmission plate.

9. The multi-stage transmission bicycle of claim 1, wherein the transmission gear teeth include a low speed transmission gear teeth adjacently disposed with the pedal and a high speed transmission gear teeth disposed at an outside of the low speed transmission gear teeth.

10. The multi-stage transmission bicycle of claim 1, wherein the number-of-revolutions changing module includes a motor applying a rotational force to the driving gear, and a manipulation part formed at the handle of the frame in order to control the revolution of the motor.
